# EUROPEAN PATENT SPECIFICATION

(11) **EP 2 891 613 B1**
(45) Date of publication and mention of the grant of the patent: **30.12.2015**
(21) Application number: 13832100.5
(22) Date of filing: 14.08.2013
(51) Int. Cl.: B65D 85/804, A47J 31/36

(54) **CAPSULE FOR PRODUCING A BEVERAGE**
KAPSEL ZUR HERSTELLUNG EINES GETRÄNKS
CAPSULE POUR L'ÉLABORATION DE BOISSON

(30) Priority: 28.08.2012 ES 201231337
(43) Date of publication of application: 08.07.2015
(73) Proprietor: Cocatech, S.L.U., 28001 Madrid (ES)
(72) Inventor: FLORES ARNAIZ, Jesús Guillermo, 28001 Madrid (ES); FERNÁNDEZ SAENZ, Pedro, 28001 Madrid (ES)
(74) Representative: Ungria López, Javier
(86) International application number: PCT/ES2013/070598
(87) International publication number: WO 2014/033340

(56) References cited:
- EP-A1- 1 247 756
- EP-A1- 1 555 219
- EP-A1- 1 808 382
- EP-A1- 1 864 917
- EP-A1- 1 980 501
- EP-A1- 2 236 437
- EP-A1- 2 343 247
- EP-A1- 2 487 122
- WO-A1-2009/115475
- WO-A1-2010/046923
- WO-A2-2006/016813
- WO-A2-2010/013146
- US-A1- 2010 043 646
- US-A1- 2010 307 930
- US-A1- 2011 064 852

## Description

### OBJECT OF THE INVENTION

The invention consists of a capsule of the type comprising a product inside, and in which a fluid is pressure injected to carry out the mixture of the fluid with the food product, so that the mixture produced emerges from the capsule through an outlet. The object of the invention is to provide a new capsule configuration to simplify its manufacture.

In general, the invention is applicable to obtain beverages by means of capsules containing a food product to which a fluid is pressure injected; more precisely, to obtain infusions and more specifically, in the elaboration of coffee.

### BACKGROUND OF THE INVENTION

From the state of the art, US Patent 3 292 527 can be cited, wherein an apparatus is described, which is intended to prepare and dispense a beverage by means of a capsule containing a product that is perforated in order to apply a liquid, thus obtaining a beverage without entering into contact with the cartridge.

The European patent document under application publication number EP 1 574 452 describes a capsule comprising a product inside, such as a food product, in which a fluid is pressure injected to be mixed with said fluid, so that the bottom of the chamber containing the product is deformed and pressed against breakage means producing the breakage of said bottom and allowing the outflow of the fluid mixed with the product through an outlet of the capsule.

In another embodiment of the aforementioned document, the breakage means are arranged at the bottom itself, so that, when deformed, they press against a surface sealing the outlet and break it to allow the outflow of the fluid mixed with the product.

In the European patent document under application publication number EP 1 908 706, a fluid is also pressure injected to be mixed with a product contained in the capsule so that next to the chamber containing said product, it comprises a series of partitions in the form of a labyrinth to slow down the outflow of the fluid mixed with the product to achieve a better homogenization of said mixture.

The European patent document under application publication number EP 1 784 344 describes a capsule comprising an air chamber in which a fluid is pressure injected so that, through perforations, it passes on to a chamber containing a product such as a food substance, thus mixing with the product so that the bottom of the chamber containing the product is deformed and presses against breakage means, producing the breakage and allowing the outflow of the fluid mixed with the product through an outlet arranged in the capsule. That same document, as it can be observed in its figure 12, envisages that the bottom of the chamber containing the product incorporates a series of perforations allowing the passage of the fluid mixed with the product, instead of carrying out the breakage of said bottom by means of the breakage means by pressure injecting the fluid.

The present invention constitutes an alternative to the aforementioned documents that simplifies the manufacture of the capsule, thus reducing its cost.

Document EP 1 980 501 A1 discloses a capsule for preparing drinks by passing a liquid through a powdered substance contained in a chamber made in the capsule. The chamber being limited on one side by at least one filter element with a plurality of through-holes extending from a first face of the filter element and facing the inside of the chamber to a second face of the filter element. The through holes at least at the first face have inlet sections extending according to a main trajectory of extension and each having a length, measured along the main trajectory of extension, greater than their width, measured transversally to the main trajectory of extension.

It is also known document EP 1555 219 A1 which discloses a cartridge containing one serving of coffee powder for preparing a coffee beverage comprises a cartridge body having a cup-like shaped lower portion and a cover portion; the cup-like shaped lower portion having a bottom portion and a upper region; and a lower filter element located inside the cup-like shaped lower portion between the coffee powder and the bottom portion; in which the interior of the cup-like shaped lower portion of the cartridge is provided with engaging means, and in which the lower filter element is provided with a peripheral edge portion engaging the engaging means for clampinaly fix the lower filter element to the cup-like shaped lower portion of the cartridge.

It is also known document WO 2010/013146 A2 where an apparatus comprising a liquid dispensing assembly to be used in combination with a capsule containing infusible material and/or water soluble extracts to prepare a selected beverage is disclosed. The dispensing assembly comprises a supply unit that supplies the capsule with a liquid within the apparatus whereby the liquid is at a predetermined and controlled temperature and pressure; the capsule is delimited by sidewalls and completed with an outwardly raised rim; the dispensing assembly comprising a coupling system that retains the outward edge or the raised rim to create a fluid-tight seal between the capsule to the liquid-supplying unit during the production of a selected beverage.

Document EP 1 808 382 A1 is also known, where it is disclosed a capsule for the preparation of a beverage by injection of a fluid under pressure comprising a chamber containing a substance, a retaining wall such as a thin film and opening means allowing the capsule to be opened for allowing the beverage to flow out of the capsule. The opening means comprises a multitude of puncturing elements which are configured to engage the retaining walls, such as a thin film, of the chamber under the effect of the rise in pressure in the chamber.

Document EP 2 236 437 A1 is also known, in said document a capsule for use in a beverage production device is disclosed. The capsule contains ingredients to produce a nutritional of food liquid when a liquid is fed into the capsule at an inlet face thereof, the capsule being provided with a filter having a plurality of filtering orifices, wherein it comprises a flow collection member placed downstream of the filter to collect the filtered liquid from the filtering orifices. The collection member comprises at least one restriction orifice to focus the flow of liquid in at least one jet of liquid at high velocity in the compartment containing the ingredients.

It is also known document US 2010/307930 where it is disclosed a labyrinth capsule, said labyrinth capsule consists of a cup-shaped capsule, the capsule base of which is formed from a labyrinth plate having a labyrinth structure and puncturing pins on its upper side. A hole with a central round stud is located in the labyrinth plate center. A sealing film is placed on the labyrinth plate and is welded along its edge to the edge of the labyrinth plate. The capsule is sealed on its upper edge with a closure film, thereby closing in the filling. When liquid presses in through the closure film, the sealing film is pressed against the labyrinth plate. The puncturing pins puncture the sealing film. The liquid flows through the puncture holes and, thereafter, to the lower side of the labyrinth plate, to the labyrinth, and drains out between the labyrinth ridges.

In document US 2010043646 A1 it is disclosed a cartridge, particularly for espresso coffee machines, for extracting a beverage from a particutate substance contained therein by means of water under pressure is provided. The cartridge comprises a main body with a cup portion and a lid portion. The cup portion comprises a base, a sidewall and a rim opposed to the base, while the lid portion is fixedly attached to the rim of the cup portion so as to define an internal volume of the cartridge. The internal volume of the cartridge houses the particulate substance comprised within filtering means for retaining the particulate substance and for percolating fluid substances therethrough. The lid portion comprises a normally closed lid port defining a first passage for percolation fluid substances when it is opened.; The cartridge further comprises a tappet arranged inside the internal volume so as to pierce the base when a pressure is applied to the base towards the internal volume, thus opening a normally closed cup port.

### DESCRIPTION OF THE INVENTION

The invention relates to a capsule sealed on top in an airtight manner by means of a lid through which a fluid is pressure injected to a first chamber containing a food product, so that the pressure injected fluid is mixed with said food product. The bottom of the first chamber is equipped with perforations which, when the pressure increases due to the injection of the fluid, allow the passage of the fluid mixed with the food product on to a second chamber. In addition, the second chamber comprises partitions in the form of a labyrinth to slow down the outflow of the mixture of the fluid with the food product, which emerges through an outlet of the capsule.

The capsule of the invention presents the novelty of being constituted from a container opened by its top side and whose bottom is equipped with a central opening, in correspondence with which an extension defining the outlet is included, and whose external configuration is adapted to the bowl of a conventional beverage-making machine.

In general terms, said capsule comprises at least one upper frusto-conical section, delimited on top by a peripheral rim and on the bottom by at least one peripheral step, from which it continues along a small conical stretch defining its bottom which, as explained above, can be preceded by one or more stepped sections.

The outlet is sealed in an airtight manner by a micro-membrane equipped with notches in its surface to favor its breakage when the pressure of the injected fluid increases, whose breakage allows the passage of the fluid, mixed with the food product towards the outlet. This configuration provides an airtight closure of the outlet, which, along with the airtight closure of the lid of the first chamber containing the food product, preserves the product in perfect condition until the capsule is used for the elaboration of the beverage in a conventional machine carrying out the injection of the fluid through said upper lid, as described above.

In addition, the capsule of the invention comprises a plate constituting the bottom of the first chamber including the perforations for the passage of the fluid mixed with the product, and, along with the bottom of the container, they establish the second chamber with the partitions in the form of a labyrinth, so that when the pressure increases as the fluid is injected into the capsule, the pressure increases at the upper surface of the plate, allowing the passage of the fluid mixed with the food product, inside the second chamber through the perforations. Therefore, the pressure of the fluid mixed with the food product increases progressively at the second chamber, causing the breakage of the micro-membrane and consequently the outflow of the fluid mixed with the food product outside the capsule with the elaborated beverage.

In the preferred embodiment of the invention, the small partitions are arranged on the lower side of the plate, obtaining a single-piece plate set along with the aforementioned partitions. This configuration facilitates the assembly of the capsule because, when assembling the plate inside the container, the partitions are arranged inside the second chamber simultaneously, unlike the state of the art, in which an independent piece needs to be assembled prior to the formation of the second chamber. This simplification determines a lower manufacturing cost for the capsule, and thus, a reduction in its final price.

The plate is equipped with a peripheral rim supported by and affixed to a peripheral step provided with the container. This characteristic also facilitates the assembly of the plate inside the capsule; given that the second chamber with the partitions in the form of a labyrinth are obtained by affixing the plate on the peripheral step provided in the container. In one of the embodiments of the invention, the container comprises stiffening and supporting radial nerves of the capsule, which are arranged laterally to the extension defining the outlet, and present a configuration adapted to the shape of the bowl of the conventional machine to which the latter is attached. These nerves give the capsule greater consistency and stability.

Another embodiment of the invention does not envisage the incorporation of these nerves for the cases in which providing the capsule with greater solidity is not required. In these cases, the capsule is also adapted to the configuration of the bowl of the conventional machine to which it is attached.

The small partitions provided in the lower side of the plate present the appropriate dimensions so that they are located near the bottom of the container, so the aforementioned functionality of the labyrinth can be realized.

The plate and the bottom of the container, which define the second chamber, can present a straight or a conical surface or a combination thereof. In the preferred embodiment, the second chamber progressively increases in height from the outside towards the centre to slow down the passage of the fluid mixed with the food product through the labyrinth formed by the partitions.

In addition, in the preferred embodiment of the invention, the container is constituted by an upper conical section, which, after a step, is followed by a small conical chamber, which is equipped with the partitions in the form of a labyrinth that ends by means of the extension defining the outlet, constituted by a cylindrical section. If the stiffening radial nerves described above are incorporated, they are envisaged as arranged laterally to the outlet.

In addition, as commented above, the second chamber increases progressively in height from the outside towards the centre and the small partitions are arranged by forming discontinued concentric circles, whose discontinuities face each other in alternating concentric circles to allow carrying out the labyrinth functionality. In addition, the invention envisages that the partitions can adopt a radial configuration, if facilitating the conduction of the fluid mixed with the food products towards the outlet is required. Therefore, the length of the small partitions decreases from the outside to the inside and their height increases from the outside to the inside.

The invention envisages that the perforations of the plate can comprise a set of micro-perforations adopting a configuration of micro-circles, micro-frusto-conical or micro-frusto-pyramidal. The invention also envisages that the perforations of the plate can be larger and sealed by means of a textile membrane with a high thickness index, allowing the passage of the fluid mixed with the food product.

An embodiment of the invention establishes that the plate's set of perforations or micro-perforations are aligned in radial lines, facilitating the passage of the fluid mixed with the food product towards the second chamber when required.

The micro-membrane is made from a material that preserves the airtight closure of the outlet, such as aluminum, plastic, a polymer, silicone, a textile material or an airtight nipple with a pressurized opening valve. In any of the cases, the micro-membrane has to preserve the airtight closure of the product contained in the capsule, and must allow its breakage when increasing the pressure, thus allowing the passage of the fluid mixed with the product.

In order to facilitate the manipulation of the capsule, the upper surface of the container comprises a roughness facilitating the grip to place the capsule in the bowl of the beverage-making machine.

The capsule's nozzle is equipped with a peripheral rim in which the lid is thermo-sealed, thus carrying out the capsule's airtight closure and protecting the food product stored within.

Finally, it should be noted that a number of blades can be located inside the outlet, which provoke a laminar flow of the fluid towards the outside of the outlet, in the form of a "mouse's tail".

Therefore, in one embodiment of the invention, the blades present a configuration determined by radial fins, but it also envisages the possibility that the blades can be constituted by sections of diametral partitions which alternate orthogonally in the vertical direction, whose borders comprise horizontal extensions in opposite directions at each midpoint of the same. These horizontal extensions are arranged as steps, which allow obtaining the outflow of the fluid in the form of a "mouse's tail".
In this case, the container can be manufactured by thermoforming or by injection. Thermoforming is mainly used when the container does not comprise the stiffening and supporting radial nerves, and injection is used when said stiffening and supporting radial nerves are incorporated, in which case the outlet's blades are obtained, thus forming one single piece with the container.
In any of the manufacturing cases of this capsule, any appropriate material may be used, ranging from polymers, plastic compounds, plasticized cardboard to even metallic materials such as aluminum. Next, for a better comprehension of this specification, and forming an integral part of the same, a series of figures accompany this specification in which the object of the invention has been represented by way of illustration and not by way of limitation.

### BRIEF DESCRIPTION OF THE FIGURES

Figure 1.- shows an exploded perspective view of an example of one embodiment of the invention.
Figure 2.- shows a sectional view of the previous figure in which the different elements making up the capsule are assembled.

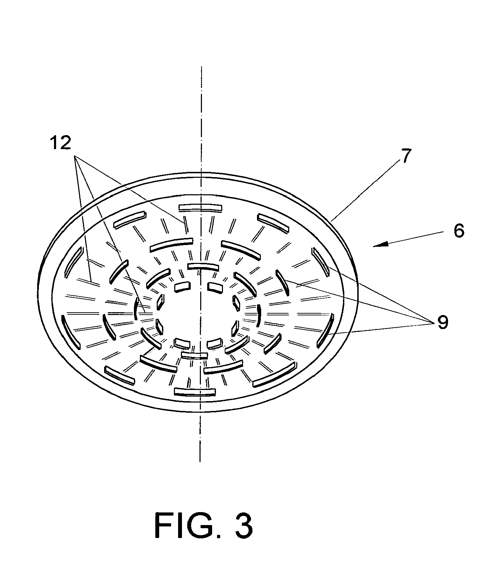

Figure 3.- shows a lower perspective view of the plate delimiting the second chamber, whose lower side comprises the partitions in the form of a labyrinth.
Figure 4.- shows a sectional perspective view from another possible example of an embodiment of the invention in which the stiffening radial nerves have been eliminated.
Figures 5 and 6.- show a perspective view of two possible examples of an embodiment of the blades provided inside the outlet in order to obtain an outflow of the fluid mixed with the food product in the form of a "mouse's tail".

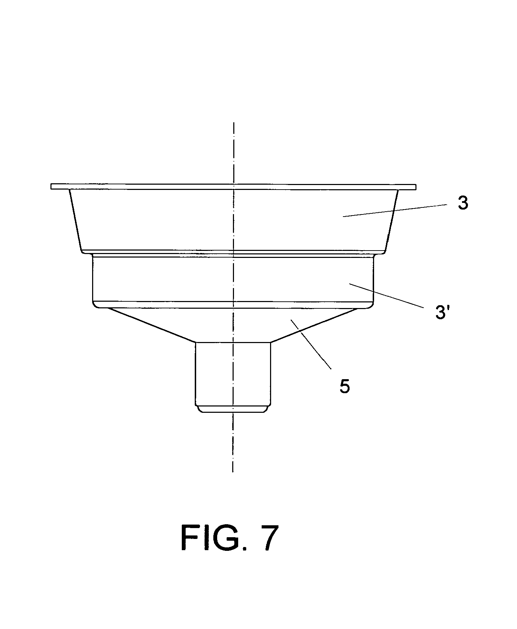

Figure 7.- shows an example of an embodiment of a capsule with a staggered structure.

### DESCRIPTION OF THE PREFERRED EMBODIMENTS

Next, a description of the invention is made with the help of the previous figures.

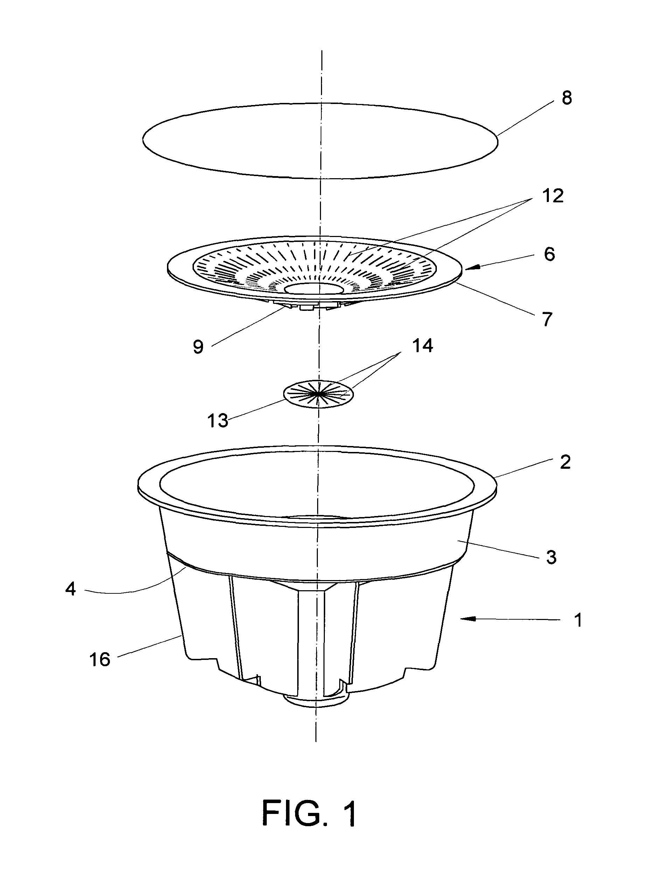

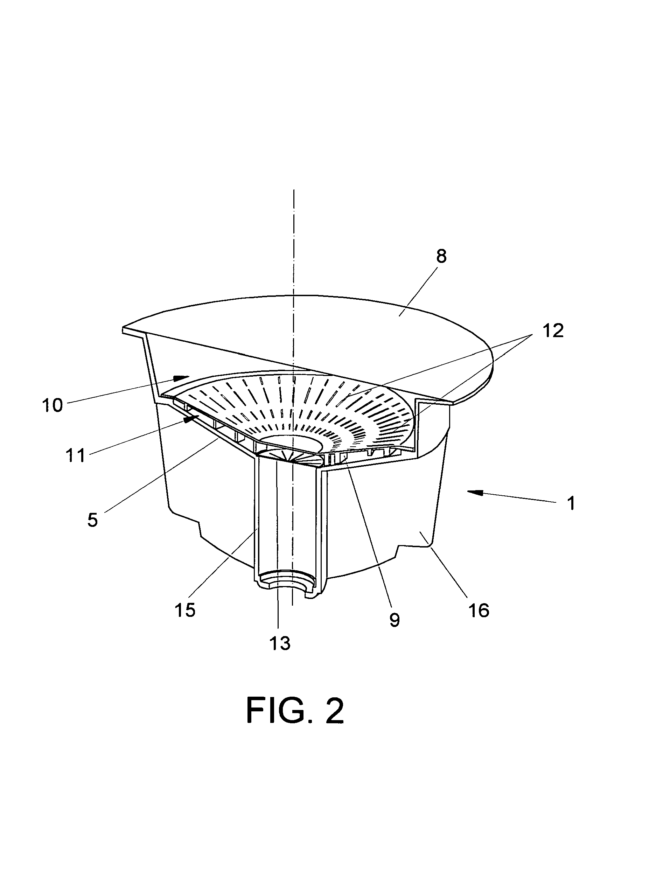

Figures 1 and 2 show a first example of an embodiment of the invention in which the capsule comprises a container 1, opened by its upper side, whose nozzle is equipped with a peripheral rim 2 over which a lid 8 is arranged, which is thermo-sealed to carry out an airtight closure of the capsule as described below.

The capsule 1 comprises at least one upper frusto-conical section 3, delimited on top by the peripheral rim 2 and on the bottom by at least one peripheral step 4, from which it continues along a small conical stretch defining the bottom 5 of the container 1.

In another preferred embodiment, the capsule comprises a step, with a first frusto-conical section 3, followed by a cylindrical section 3' and ending with said small conical section defining the bottom 5.

The conical section 3 presents a rough external surface or marks that facilitate the grip of the capsule for its manipulation during its introduction into a conventional beverage-making machine.

In addition, the capsule comprises a plate 6 equipped with a peripheral rim 7 supported by and affixed to the peripheral step 4 of the container 1 so that a first chamber 10 is formed between the upper surface of the plate 6 and the lid 3, in which a food product is placed, such as, for example, ground and compacted coffee, and a second conical chamber 11 is formed between the lower side of the plate 6 and the bottom 5 of the container 1 with increasing height from the outside to the inside, for which the plate 6 and the bottom 5 present conical configurations that provide the described configuration as observed in figure 2.

The plate 6 comprises a set of perforations 12, whose functionality will be described below, and its lower side incorporates a set of partitions 9 that are located near the bottom 5 of the container 1.

The central part of the bottom 5 will be equipped with an opening, in correspondence with which an outlet 15 is incorporated, sealed by means of a micro-membrane 13 carrying out an airtight closure of the outlet 15, which, along with the lid 8, preserves the food product contained in the chamber 10 isolated from the outside, preventing its oxidation and preserving it in perfect conditions until the capsule is used to elaborate a beverage by means of a machine from those conventionally used for this purpose.

The micro-membrane 13 is equipped with a series of notches 14 that allow carrying out the breakage of the micro-membrane 13 when the pressure of the second chamber 11 exceeds certain value.

In order to allow affixing the micro-membrane 13, the central opening providing access to the outlet 15 incorporates a slightly thick small surface where said micro-membrane 13 is thermo-sealed, carrying out the aforementioned airtight closure.

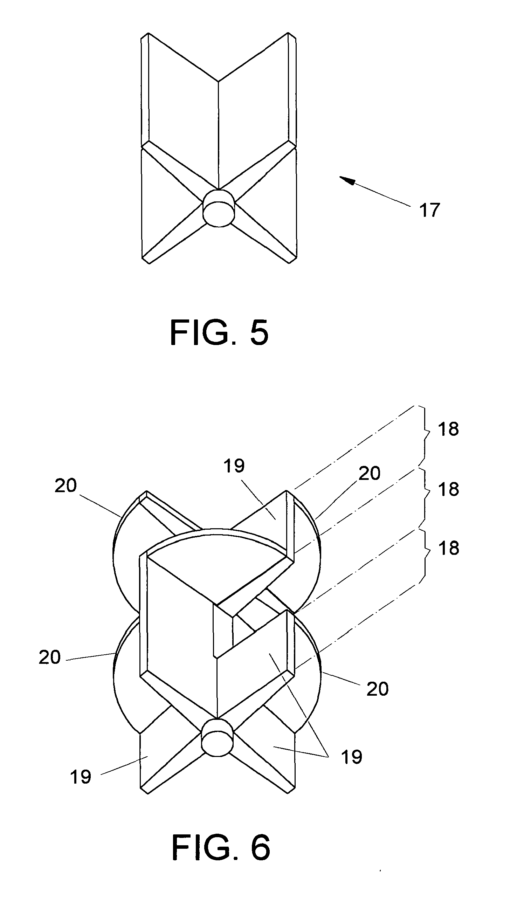

In the preferred embodiment of the invention, the micro-membrane has a thickness comprised between 20-50 µm, to facilitate its breakage by pressure.
The micro-membrane 13 can be manufactured in aluminum, in any plastic compound, a polymer sheet, silicone, a textile material, or even an airtight silicone nipple equipped with a pressurized opening valve.
The capsule comprises stiffening and supporting radial nerves 16, arranged laterally to the outlet 15 and from the lower side of the bottom 5 of the container 1. The structure of the container 1 is designed to adapt to the shape of the bowl of the machine to which it must be coupled for the elaboration of the beverage. The partitions 9 present a configuration established by discontinued concentric circles, whose discontinuities face each other in alternating concentric circles. This configuration, along with the configuration of the second chamber 11, determines that the length of the partitions 9 decreases from the outside to the inside and their height increases from the outside to the inside, to adapt to the configuration of said second chamber 11, which, as described above, present a configuration with an increasing height from the outside to the inside.
In order to elaborate a beverage by means of the described capsule, the capsule is placed in a conventional beverage-making machine equipped with a needle perforating the lid 8, entering the first chamber 10 in which a fluid is pressure injected, such as boiling water, which mixes with the ground coffee directly, so that the pressure of the first chamber 10 increases progressively, allowing the passage of the fluid mixed with coffee through the perforations 12 to the second chamber 11, in which it interacts with the partitions 9 by flowing through the labyrinth they form, which slows down the outflow of the fluid mixed with the food product, so that when the pressure continues to increase in the second chamber 11, the breakage of the micro-membrane 13, favored by the arrangement of the notches 14, takes place in such a way that the elaborated coffee is directed by the outlet 15 to the outside.
The perforations 12 may be constituted by 0.05 x 0.4 mm micro-slots; but the invention also envisages that they may be constituted by smaller or larger perforations, circularly or frusto-conically shaped. The invention also envisages that the perforations are very large and sealed by a very thick textile membrane that acts as a filter and an element separating the coffee from the cream, allowing, in any case, the passage of the fluid mixed with the product to the second chamber 11.
Therefore, the geometry and the dimensions, as well as the number of perforations 12 can be adapted to the required needs. For example, the arrangement of the perforations 12 forming radial lines of approximately twelve slots in a total of fifty lines is envisaged, achieving an approximate outlet surface of 12 mm². This area needs to be small to provoke an increase in the pressure in this surface, improving the separation process of the cream and the coffee, or even their arrangement in the form of a grid.
The container 1 represented in figures 1 and 2 is manufactured by means on an injection method, which provides that the container 1 is constituted by a single piece along with the stiffening radial nerves 16.
The invention envisages the incorporation of blades 17 in the outlet 15, such, as for example, radial fins 17, like the ones shown in figure 5, which can support an internal step of the outlet 15 provided for that purpose, or they can be adhered by heat in said outlet, or they may form a single piece together with the container when manufactured by means of the injection method referred to in figures 1 and 2. The fact that the radial fins 17 are free does not affect their use because the capsule needs to be used in a vertical position at all times, so the radial fins 17 fall to their working position due to gravity.

The height of the radial fins 17 depends on the length of the outlet and may oscillate among values comprised between 9 and 15 mm.

Figure 6 shows another embodiment of the blades 17, with the particularity that in this case they are comprised by sections 18 of diametral partitions 19 that alternate orthogonally in the vertical direction, whose borders present horizontal extensions 20 in opposite directions at each midpoint of said borders. These horizontal extensions 20 are arranged as steps. The purpose of the configuration of the aforementioned blades 17 is providing an outflow of fluid in the form of a "mouse's tail".

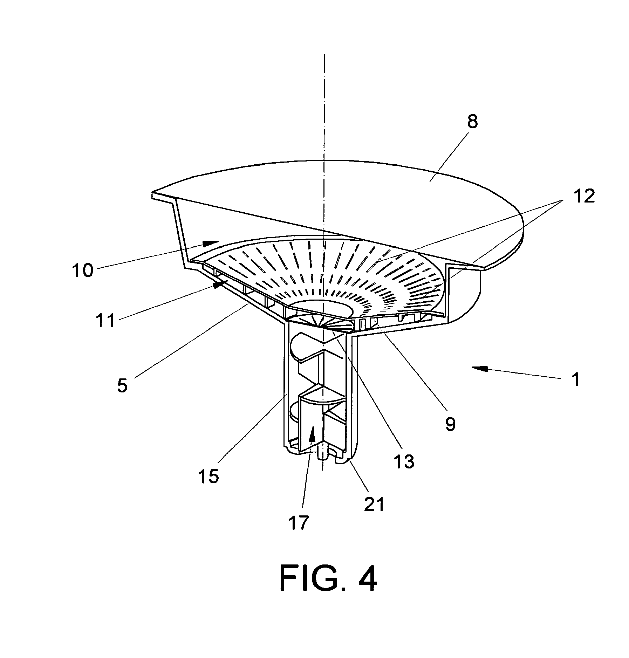

Figure 4 shows another possible embodiment of the invention similar to the one shown in figures 1 and 2, but with the difference that, in this case, it does not incorporate the stiffening and supporting radial nerves 16 and the blades 17 form an independent piece. In this case, the container also adapts to the configuration of the bowl of the beverage-making machine.

In the example of figure 4, the container is manufactured by thermoforming, obtaining considerable savings in time and plastic, and, therefore, a lower capsule cost.

Finally, the outlet 15 presents a small peripheral step 21 in its external edge for an appropriate coupling and stabilization in the border of the lower orifice of the bowl of the corresponding machine.

Likewise, said outlet (15) presents a length of at least half of the total height of the container (1), so that its adaptation to bowls of larger machines is possible without having to increase the size of the internal chambers of said containers.

## Claims

1. Beverage-making capsule:
- comprising one lid (8) through which a fluid is pressure injected to a first chamber (10) containing a food product, and said fluid mixes with said food product;
- the bottom of said first chamber (10) comprises perforations (12) allowing the passage of the fluid, mixed with the food product, to a second chamber (11) when the pressure increases due to the injection of the fluid;
- said second chamber (11) being equipped with partitions (9) to slow down the outflow of the mixture of the fluid and the food product;
- the capsule comprising an outlet (15) through which the fluid and food product mixture is obtained after said second chamber (11);
- the capsule comprising a container (1) opened by its top side;
- a plate (6) constituting the bottom of the first chamber (10) equipped with the perforations (12) for the passage of the fluid, mixed with the food product, which, together with the bottom (5) of the container (1), define the second chamber (11) with partitions (9), so that, when an increase in the pressure of its upper surface is provoked, they allow the passage of the fluid mixed with the food product to the second chamber (11),
**characterized in that**
- the partitions (9) are in the form of a labyrinth;
- the container (1) opened by its top side has a bottom equipped with a central opening, in correspondence with which an extension defining the outlet (15) is included, and whose external configuration is adapted to the bowl of a conventional beverage-making machine;
- a micro-membrane (13) closes the opening of the bottom of the container (1) in an airtight manner, and said micro-membrane (13) comprises notches (14) in its surface to favor its breakage due to the pressure of the injected fluid, allowing the passage of the fluid mixed with the food product towards the outlet (15);
- the breakage of the micro-membrane (13) takes place when the pressure of the fluid increases;
- wherein said small partitions (9) are arranged on the lower side of the plate (6), obtaining a single-piece set with the plate (6) and the partitions (9).

2. Beverage-making capsule according to claim 1, **characterized in that** the plate (6) comprises a peripheral rim (7) that is supported by and affixed to a peripheral step (4) provided in the container (1).

3. Beverage-making capsule according to claim 1, **characterized in that** the container (1) comprises stiffening and supporting radial nerves (16) for the capsule that are adapted to the shape of the bowl of the machine to which it is coupled, located laterally to the extension defining the outlet (15).

4. Beverage-making capsule according to claim 1, **characterized in that** the small partitions (9) provided in the lower side of the plate (6) are arranged near the bottom (5) of the container (1).

5. Beverage-making capsule according to claim 1, **characterized in that** the plate (6) and the bottom (5) of the container (1) defining the second chamber (11) comprise a surface selected among straight, conical and a combination thereof.

6. Beverage-making capsule according to claim 1, **characterized in that** the container (1) comprises an upper frusto-conical section (3) which, after a step (4), is followed by a small conical chamber, provided with the partitions (9) in the form of a labyrinth forming the second chamber (11), labyrinth, which ends by means of the extension defining the outlet (15); being said extension constituted by a cylindrical section.

7. Beverage-making capsule according to claim 1, **characterized in that** the container (1) comprises a step with, at least, a first frusto-conical section 3 followed by, at least, another cylindrical section (3') and ending with a small conical section defining the bottom (5).

8. Beverage-making capsule according to claim 1, **characterized in that** said outlet (15) presents a length of at least half of the total height of the container (1).

9. Beverage-making capsule according to claim 5, **characterized in that** the second chamber increases its height progressively from the outside towards the centre.

10. Beverage-making capsule according to claim 1, **characterized in that** the small partitions (9) are arranged by forming a configuration selected from discontinued concentric circles, whose discontinuities face each other in alternating concentric circles, and a radial configuration.

11. Beverage-making capsule according to claims 5 and 10, **characterized in that** the length of the small partitions decreases from the outside to the inside and whose height increases from the outside to the inside.

12. Beverage-making capsule according to claim 1, **characterized in that** the perforations (12) of the plate (6) comprise a set of micro-perforations with a configuration selected among micro-circles, micro-frusto-conical and micro-frusto-pyramidal.

13. Beverage-making capsule according to claim 1, **characterized in that** the perforations (12) of the plate (6) are sealed by means of a textile membrane with a high thickness index.

14. Beverage-making capsule according to claim 12 or 13, **characterized in that** the set of perforations or micro-perforations of the plate are aligned in radial lines or in the form of a grid.

15. Beverage-making capsule according to claim 1, **characterized in that** the micro-membrane (13) is made from a material selected among aluminum, plastic, polymer, silicone, textile material and an airtight silicone nipple with a pressurized opening valve.

16. Beverage-making capsule according to claim 1, **characterized in that** the external surface of the capsule comprises a roughness or marks facilitating the grip.

17. Beverage-making capsule according to claim 1, **characterized in that** the container (1) comprises a peripheral rim (2) in which the lid (8) is thermo-sealed.

18. Beverage-making capsule according to claim 1, **characterized in that** the interior of the outlet (15) comprises blades (17) provoking a laminar flow of the fluid outwards the outlet (15) in the form of a "mouse's tail".

19. Beverage-making capsule according to claim 18, **characterized in that** the blades (17) present a configuration selected between radial fins (17) and sections (18) of diametral partitions (19) that alternate orthogonally in the vertical direction, whose borders present horizontal sections (20) in opposite directions at each midpoint of said borders in the form of steps.

20. Beverage-making capsule according to claim 1, **characterized in that** the container (1) is manufactured by a method selected between thermoforming and injection.

21. Beverage-making capsule according to claim 1, **characterized in that** the material for its fabrication is selected among polymers, plastic compounds, plasticized cardboard, metallic materials or a combination thereof.

## Patentansprüche

1. Getränkezubereitungskapsel, die umfasst:
einen Deckel (8), über den eine Flüssigkeit unter Druck in eine erste Kammer (10) eingespritzt wird, die ein Lebensmittelerzeugnis enthält, und wobei sich die Flüssigkeit mit dem Lebensmittelerzeugnis vermischt;
wobei der Boden der ersten Kammer (10) Perforationen (12) umfasst, die mit dem Lebensmittelerzeugnis vermischte Flüssigkeit in eine zweite Kammer (11) durchlassen, wenn der Druck aufgrund des Einspritzens der Flüssigkeit ansteigt;
die zweite Kammer (11) mit Trennwänden (9) versehen ist, die das Ausströmen des Gemischs aus der Flüssigkeit und dem Lebensmittelerzeugnis verlangsamen;
die Kapsel einen Auslass (15) umfasst, über den das Gemisch aus Flüssigkeit und Lebensmittelerzeugnis nach der zweiten Kammer (11) bezogen wird;
die Kapsel einen Behälter (1) umfasst, der über seine Oberseite offen ist;
eine Platte (6), die den Boden der ersten Kammer (10) bildet, der mit den Perforationen (12) zum Durchlassen der mit dem Lebensmittelerzeugnis vermischten Flüssigkeit versehen ist, die zusammen mit dem Boden (5) des Behälters (1) die zweite Kammer (11) mit Trennwänden (9) bilden, so dass sie, wenn ein Druckanstieg an ihrer Oberseite veranlasst wird, die mit dem Lebensmittelerzeugnis vermischte Flüssigkeit in die zweite Kammer (11) durchlassen,
**dadurch gekennzeichnet, dass**
die Trennwände (9) die Form eines Labyrinths haben;
der Behälter (1), der an seiner Oberseite offen ist, einen Boden (6) hat, der mit einer Mittelöffnung versehen ist, der einer den Auslass (8) bildende Abmessung entspricht und deren Außenform an die Aufnahme der Getränkezubereitungsmaschine angepasst ist,
eine Mikromembran (13) die Öffnung des Bodens des Behälters (1) luftdicht verschließt und die Mikromembran (13) an ihrer Oberfläche Einkerbungen (14) umfasst, die ihr Reißen aufgrund des Drucks der eingespritzten Flüssigkeit erleichtern, so dass die mit dem Lebensmittelerzeugnis vermischte Flüssigkeit zu dem Auslass (15) durchgelassen wird;
das Reißen der Mikromembran (13) stattfindet, wenn der Druck des Fluids ansteigt;
wobei die kleinen Trennwände (9) an der Unterseite der Platte (6) angeordnet sind und die Platte (6) sowie die Trennwände (9) eine aus einem Stück bestehende Gruppe bilden.

2. Getränkezubereitungskapsel nach Anspruch 1, **dadurch gekennzeichnet, dass** die Platte (6) einen Umfangsrand (7) umfasst, der von einem in dem Behälter (1) vorhandenen Umfangsabsatz (4) getragen wird und daran befestigt ist.

3. Getränkezubereitungskapsel nach Anspruch 1, **dadurch gekennzeichnet, dass** der Behälter (1) versteifende und schützende radiale Rippen (16) für die Kapsel umfasst, die an die Form der Aufnahme der Maschine angepasst sind, in die sie eingesetzt wird, und die sich seitlich an dem Ansatz befinden, der den Auslass (15) bildet.

4. Getränkezubereitungskapsel nach Anspruch 1, **dadurch gekennzeichnet, dass** die an der Unterseite der Platte (6) vorhandenen kleinen Trennwände (9) in der Nähe des Bodens (5) des Behälters (1) angeordnet sind.

5. Getränkezubereitungskapsel nach Anspruch 1, **dadurch gekennzeichnet, dass** die Platte (6) und der Boden (5) des Behälters (1), die die zweite Kammer (11) bilden, eine Fläche umfassen, die aus einer geraden Fläche, einer kegelförmigen Fläche und einer Kombination daraus ausgewählt wird.

6. Getränkezubereitungskapsel nach Anspruch 1, **dadurch gekennzeichnet, dass** der Behälter (1) einen oberen kegelstumpfförmigen Teilabschnitt (3) umfasst, auf den nach einem Absatz (4) eine kleine kegelförmige Kammer folgt, die mit den Trennwänden (9) in Form eines Labyrinths versehen ist, die das Labyrinth der zweiten Kammer (11) bilden, die über dem Ansatz endet, der den Auslass (15) bildet, wobei der Ansatz durch einen zylindrischen Teilabschnitt gebildet wird.

7. Getränkezubereitungskapsel nach Anspruch 1, **dadurch gekennzeichnet, dass** der Behälter (1) einen Absatz mit wenigstens einem ersten kegelstumpfförmigen Teilabschnitt (3) umfasst, auf den wenigstens ein weiterer zylindrischer Abschnitt (3') folgt, und der mit einem kleinen kegelförmigen Teilabschnitt endet, der den Boden (5) bildet.

8. Getränkezubereitungskapsel nach Anspruch 1, **dadurch gekennzeichnet, dass** der Auslass (15) eine Länge von wenigstens der Hälfte der Gesamthöhe des Behälters (1) hat.

9. Getränkezubereitungskapsel nach Anspruch 5, **dadurch gekennzeichnet, dass** die Höhe der zweiten Kammer von außen zur Mitte hin allmählich zunimmt.

10. Getränkezubereitungskapsel nach Anspruch 1, **dadurch gekennzeichnet, dass** die kleinen Trennwände (9) angeordnet werden, indem eine Form ausgebildet wird, die aus unterbrochenen konzentrischen Kreisen, deren Unterbrechungen einander in abwechselnden konzentrischen Kreisen zugewandt sind, und einer radialen Form ausgewählt wird.

11. Getränkezubereitungskapsel nach den Ansprüchen 5 und 10, **dadurch gekennzeichnet, dass** die Länge der kleinen Trennwände von außen nach innen abnimmt, und ihre Höhe von außen nach innen zunimmt.

12. Getränkezubereitungskapsel nach Anspruch 1, **dadurch gekennzeichnet, dass** die Perforationen (12) der Platte (6) eine Gruppe von Mikroperforationen mit einer Form umfassen, die aus Mikro-Kreisen, Mikro-Kegelstümpfen und Mikro-Pyramidenstümpfen ausgewählt wird.

13. Getränkezubereitungskapsel nach Anspruch 1, **dadurch gekennzeichnet, dass** die Perforationen (12) der Platte (6) mittels einer Textilmembran mit einem hohen Dicke-Index (thickness index) abgedichtet sind.

14. Getränkezubereitungskapsel nach Anspruch 12 oder 13, **dadurch gekennzeichnet, dass** die Perforationen oder Mikroperforationen der Platte in der Gruppe in radialen Linien oder in Form eines Gitters ausgerichtet sind.

15. Getränkezubereitungskapsel nach Anspruch 1, **dadurch gekennzeichnet, dass** die Mikromembran (13) aus einem Material besteht, das aus Aluminium, Kunststoff, Polymer, Silikon, Textilmaterial und einem luftdichten Nippel mit einen unter Druck öffnenden Ventil ausgewählt wird.

16. Getränkezubereitungskapsel nach Anspruch 1, **dadurch gekennzeichnet, dass** die Außenfläche der Kapsel eine Rauigkeit oder Vertiefungen aufweist, die das Ergreifen erleichtert.

17. Getränkezubereitungskapsel nach Anspruch 1, **dadurch gekennzeichnet, dass** der Behälter (1) einen Umfangsrand (2) umfasst, an den der Deckel (8) heißgesiegelt ist.

18. Getränkezubereitungskapsel nach Anspruch 1, **dadurch gekennzeichnet, dass** der Auslass (15) im Inneren Flügel (17) umfasst, die eine laminare Strömung der Flüssigkeit zur Außenseite des Auslasses (15) hin in Form eines "Mäuseschwanzes" bewirken.

19. Getränkezubereitungskapsel nach Anspruch 18, **dadurch gekennzeichnet, dass** die Flügel (17) eine Form haben, die aus radialen Rippen (17) und Teilabschnitten (18) diametraler Gruppen (19) ausgewählt wird, die sich in der vertikalen Richtung im rechten Winkel abwechseln und deren äußere Ränder horizontale Teilabschnitte (20) in entgegengesetzten Richtungen an jedem Mittelpunkt der äußeren Ränder in Form von Absätzen aufweisen.

20. Getränkezubereitungskapsel nach Anspruch 1, **dadurch gekennzeichnet, dass** der Behälter (1) mittels eines Verfahrens hergestellt wird, das aus Thermoformen und Spritzgießen ausgewählt wird.

21. Getränkezubereitungskapsel nach Anspruch 1, **dadurch gekennzeichnet, dass** das Material zur Herstellung aus Polymeren, Kunststoffverbindungen, plastifiziertem Karton, Metallmaterialien oder einer Kombination derselben ausgewählt wird.

## Revendications

1. Capsule de fabrication de boisson :
comprenant un couvercle (8) à travers lequel un fluide est injecté sous pression vers une première chambre (10) contenant un produit alimentaire, et ledit fluide se mélange avec ledit produit alimentaire ;
le fond de ladite première chambre (10) comprend des perforations (12) permettant le passage du fluide, mélangé avec le produit alimentaire, vers une seconde chambre (11) quand la pression augmente du fait de l'injection du fluide ;
ladite seconde chambre (11) étant équipée de séparations (9) pour ralentir le flux sortant du mélange du fluide et du produit alimentaire ;
la capsule comprenant un orifice de sortie (15) à travers lequel le mélange de fluide et de produit alimentaire est obtenu après ladite seconde chambre (11) ;
la capsule comprenant un récipient (1) ouvert par son côté supérieur ;
une plaque (6) constituant le fond de la première chambre (10) équipée des perforations (12) pour le passage du fluide, mélangé avec le produit alimentaire, qui, conjointement avec le fond (5) du récipient (1), définit la seconde chambre (11) avec des séparations (9) de telle manière que, quand une augmentation dans la pression de sa surface supérieure est provoquée, elles permettent le passage du fluide mélangé avec le produit alimentaire vers la seconde chambre (11),
**caractérisé en ce que**
les séparations (9) sont sous la forme d'un labyrinthe ;
le récipient (1) ouvert par son côté supérieur a un fond équipé d'une ouverture centrale, en correspondance avec lequel une extension définissant l'orifice de sortie (15) est incluse, et dont la configuration extérieure est adaptée à la cuvette d'une machine de fabrication de boissons conventionnelle ;
une micro-membrane (13) ferme l'ouverture du fond du récipient (1) d'une manière étanche à l'air, et ladite micro-membrane (13) comprend des fentes (14) dans sa surface pour favoriser sa cassure du fait de la pression du fluide injecté, permettant le passage du fluide mélangé avec le produit alimentaire vers l'orifice de sortie (15) ;
la cassure de la micro-membrane (13) a lieu quand la pression du fluide augmente ;
dans lequel lesdites petites séparations (9) sont agencées sur le côté inférieur de la plaque (6), formant un ensemble d'une seule pièce avec la plaque (6) et les séparations (9).

2. Capsule de fabrication de boisson selon la revendication 1, **caractérisée en ce que** la plaque (6) comprend un rebord périphérique (7) qui est supporté par et fixé sur un degré périphérique (4) placé dans le récipient (1).

3. Capsule de fabrication de boisson selon la revendication 1, **caractérisée en ce que** le récipient (1) comprend des nervures radiales de support et de raidissement (16) pour la capsule qui sont adaptées à la forme de la cuvette de la machine à laquelle elle est couplée, situées latéralement à l'extension définissant l'orifice de sortie (15).

4. Capsule de fabrication de boisson selon la revendication 1, **caractérisée en ce que** les petites séparations (9) placées dans le côté inférieur de la plaque (6) sont agencées près du fond (5) du récipient (1).

5. Capsule de fabrication de boisson selon la revendication 1, **caractérisée en ce que** la plaque (6) et le fond (5) du récipient (1) définissant la seconde chambre (11) comprennent une surface sélectionnée parmi une surface droite, conique et une combinaison des deux.

6. Capsule de fabrication de boisson selon la revendication 1, **caractérisée en ce que** le récipient (1) comprend une section tronconique supérieure (3) qui, après un degré (4), est suivie par une petite chambre conique, pourvue des séparations (9) sous la forme d'un labyrinthe formant la seconde chambre (11), labyrinthe, qui se termine au moyen de l'extension définissant l'orifice de sortie (15) ; ladite extension étant constituée par une section cylindrique.

7. Capsule de fabrication de boisson selon la revendication 1, **caractérisée en ce que** le récipient (1) comprend un degré avec, au moins, une première section tronconique (3) suivie par, au moins, une autre section cylindrique (3') et se terminant avec une petite section conique définissant le fond (5).

8. Capsule de fabrication de boisson selon la revendication 1, **caractérisée en ce que** ledit orifice de sortie (15) présente une longueur d'au moins la moitié de la hauteur totale du récipient (1).

9. Capsule de fabrication de boisson selon la revendication 5, **caractérisée en ce que** la seconde chambre augmente sa hauteur progressivement de l'extérieur vers le centre.

10. Capsule de fabrication de boisson selon la revendication 1, **caractérisée en ce que** les petites séparations (9) sont agencées en formant une configuration sélectionnée parmi des cercles concentriques discontinus, dont les discontinuités se font face dans des cercles concentriques alternés, et une configuration radiale.

11. Capsule de fabrication de boisson selon les revendications 5 et 10, **caractérisée en ce que** la longueur des petites séparations diminue de l'extérieur vers l'intérieur et dont la hauteur augmente de l'extérieur vers l'intérieur.

12. Capsule de fabrication de boisson selon la revendication 1, **caractérisée en ce que** les perforations (12) de la plaque (6) comprennent une série de micro-perforations avec une configuration sélectionnée parmi des micro-cercles, des micro-troncs de cône et des micro-troncs de pyramide.

13. Capsule de fabrication de boisson selon la revendication 1, **caractérisée en ce que** les perforations (12) de la plaque (6) sont scellées au moyen d'une membrane textile avec un indice d'épaisseur élevé.

14. Capsule de fabrication de boisson selon la revendication 12 ou 13, **caractérisée en ce que** la série de perforations ou micro-perforations de la plaque sont alignées en lignes radiales ou sous la forme d'une grille.

15. Capsule de fabrication de boisson selon la revendication 1, **caractérisée en ce que** la micro-membrane (13) est faite d'un matériau sélectionné parmi l'aluminium, le plastique, un polymère, le silicone, un matériau textile et un joint de silicone étanche à l'air avec une vanne d'ouverture sous pression.

16. Capsule de fabrication de boisson selon la revendication 1, **caractérisée en ce que** la surface extérieure de la capsule comporte une rugosité ou des marques facilitant l'agrippement.

17. Capsule de fabrication de boisson selon la revendication 1, **caractérisée en ce que** le récipient (1) comprend un rebord périphérique (2) dans lequel le couvercle (8) est thermo-scellé.

18. Capsule de fabrication de boisson selon la revendication 1, **caractérisée en ce que** l'intérieur de l'orifice de sortie (15) comprend des lames (17) provoquant un flux laminaire du fluide vers l'extérieur de l'orifice de sortie (15) sous la forme d'une "queue de souris".

19. Capsule de fabrication de boisson selon la revendication 18, **caractérisée en ce que** les lames (17) présentent une configuration sélectionnée entre des ailettes radiales (17) et des sections (18) de séparations radiales (19) qui alternent orthogonalement dans la direction verticale, dont les limites présentent des sections horizontales (20) dans des directions opposées à chaque point médian desdites limites sous la forme de degrés.

20. Capsule de fabrication de boisson selon la revendication 1, **caractérisée en ce que** le récipient (1) est fabriqué par un procédé sélectionné entre le thermoformage et l'injection.

21. Capsule de fabrication de boisson selon la revendication 1, **caractérisée en ce que** le matériau pour sa fabrication est sélectionné parmi des polymères, des composés de plastiques, du carton plastifié, des matériaux métalliques ou une combinaison de ceux-ci.
